# EUROPEAN PATENT SPECIFICATION

(11) **EP 3 330 882 B1**
(45) Date of publication and mention of the grant of the patent: **25.11.2020**
(21) Application number: 17196162.6
(22) Date of filing: 12.10.2017
(51) Int. Cl.: G06K 7/00

(54) **CAPACITIVE INTRUSION DETECTION ON SMARTCARD READER**
KAPAZITIVE ANGRIFFSDETEKTION AUF EINEM SMARTCARD-LESEGERÄT
DÉTECTION D'INTRUSION CAPACITIVE SUR UN LECTEUR DE CARTE À PUCE

(30) Priority: 01.12.2016 US 201615367029
(43) Date of publication of application: 06.06.2018
(73) Proprietor: NXP B.V., 5656 AG Eindhoven (NL)
(72) Inventor: KORMANN, Leonhard, 5656 AG Eindhoven (NL); EISENDLE, Christian, 5656 AG Eindhoven (NL)
(74) Representative: Krott, Michel

(56) References cited:
- EP-A1- 0 619 560
- WO-A1-2004/063970
- US-B2- 8 985 447

## Description

### BACKGROUND

Smart cards are increasing being used for improving transactional security. A smart card typically includes an electronic system that can store and transmit identity or transactional data. A smart card may communicate via physical contact pad or wirelessly through near field communication. In cases where the smart card is designed to communicate with a smart card reader using physical contacts, a connector on the smart card touches a counterpart connector on the smart card reader. It is possible to connect a third device to the contact pad or on the line behind the contact pad of the smart card reader to read the information being transmitted from the smart card to the smart card reader.

Typically temper meshes are used over contact pads to identify installation of the third device. Temper meshes are securely connected to the processing system of the card reader and when temper meshes are removed or tempered with, the processing system makes the card reader inoperable to protect against data theft.

US 8,985,447 B2 describes a smartcard reader, and more particularly, systems, devices and methods of creating a card input/output interface that allows the smartcard reader to couple to a smartcard within a secure cavity. The secure cavity is mounted on an internal side of a system housing, i.e., a smartcard socket, included in the smartcard reader. An interface chip is further attached inside the secure cavity. When the smartcard is inserted to a designated position or depth inside the system housing, the secure cavity encloses the interface chip and its contact area with the smartcard. Mechanical contacts on the interface chip are thus aligned to and physically contact electrical connectors on the inserted smartcard, so as to electrically couple the interface chip and the smartcard. As a result, sensitive data within the smartcard may be protected from exposure to any tamper attempt and processed with an enhanced security level.

EP 0 619 560 A1 describes a contact smart card being inserted in a contact card reader and its capacitance being measured by applying a square wave generated by an oscillator to it via a resistor. The capacitance effect of the smart card affects the amplitude of the output from the resistor and the output is monitored in an amplitude detector connected to receive the signal output from the resistor and to compare it against a threshold level for the signal previously established and stored for an acceptable card.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In accordance with aspects of the present disclosure, a device is provided as defined in claim 1, a method is conceived as defined in claim 6, and a computer readable medium is provided as defined in claim 10. Preferred embodiments are defined in the dependent claims.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments. Advantages of the subject matter claimed will become apparent to those skilled in the art upon reading this description in conjunction with the accompanying drawings, in which like reference numerals have been used to designate like elements, and in which:
FIG. 1 depicts a schematic of a smart card reader in accordance with one or more embodiments of the present disclosure;
FIG. 2 shows graphs to illustrate identifying intrusions; - and
FIG. 3 illustrates a method of identifying intrusions.
Note that figures are not drawn to scale. Intermediate steps between figure transitions have been omitted so as not to obfuscate the disclosure. Those intermediate steps are known to a person skilled in the art.

### DETAILED DESCRIPTION

Many well-known manufacturing steps, components, and connectors have been omitted or not described in details in the description so as not to obfuscate the present disclosure. The embodiments described herein can be used for making the use of the security mesh over the contact reader slot and also to detect instruction by a third device to prevent data theft.

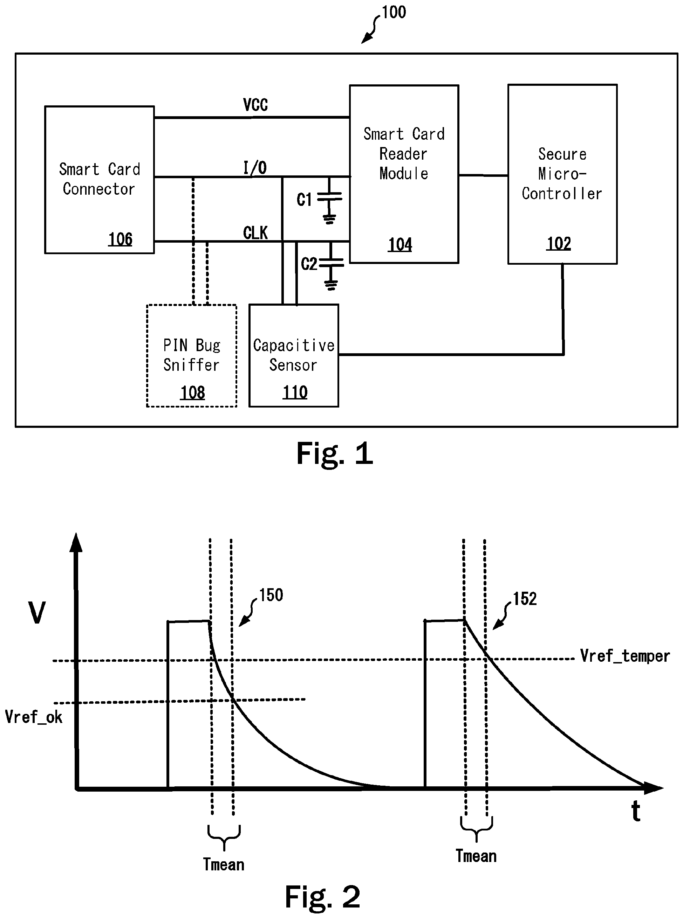

FIG. 1 depicts a schematic of a smart card reader 100. The smart card reader 100 includes a smart card connector 106 which may be housed in a slot where a smart card can be inserted and the counterpart connector in the smart card comes a physical touch with the smart card connector 106. The smart card reader 100 also includes a smart card reader module 104 that is configured to receive data from the smart card via the smart card connector 106 and provide the received data to a secure micro-controller 102 for further processing which may include sending the data securely to an offsite computer system, such as a bank's computer system. In some embodiments, the smart card reader module 104 may be configured to perform an initial data integrity check to ascertain that the smart card is in proper touch with the smart card connector 106.

The smart card connector 106 is coupled to the smart card reader module 104 via VCC (supply), CLK (clock) and I/O (input/output) lines. A PIN bug sniffer 108 is shown only to illustrate the hacking of the I/O line. The smart card reader 100 may be opened and the PIN bug sniffer 108 may be installed to capture the data being transmitted over the I/O line. The PIN bug sniffer 108 may then transmit the data to an external device typically wirelessly thus compromising the integrity of the data communication over the I/O line. The embodiments described herein are directed to prevent such intrusions by these third party rouge devices.

Two capacitors C1 and C2 may be capacitive components or they may also represent parasitic capacitance of the coupled components around these capacitors. For the ease of description, C1 and C2 are being assumed to be parasitic capacitances. A capacitive sensor 110 is included to measure a discharge rate of the capacitors C1 and C2. The capacitive sensor 110 is coupled to the secure micro-controller 102. The secure micro-controller 102 is configured to receive data from the capacitive sensor 110 and make a decision whether there is an intrusion in the I/O line according to present configurations and settings. The settings may include reference discharge rates of the capacitance in the CLK line or the I/O and the CLK line. In some embodiments, the secure microcontroller 102 may also send data to the capacitive sensor 110, for example to instruct the capacitive sensor 110 to apply a voltage to the I/O line to start parasitic capacitance measurements, as described below.

In some embodiments, the capacitive sensor 110 includes capacitance sensing material such as Indium Tin Oxide (ITO), Flame Retardant (FR), Flex, or any similar material that exhibits capacitance sensing capabilities. The capacitive sensor 110 also includes a voltage measuring circuit what provides data to the secure micro-controller 102 to determine voltage values.

The following examples, using only the I/O line to detect an intrusion, are useful for understanding the invention, but are not covered by the claims.

Figure 2 shows graphs to illustrate identifying intrusions. Figure 2 includes two graphs 150 and 152 to provide an ease of understanding as to how a determination is made whether an intrusion is present or not present. The programming logic and configurations are stored in the secure microcontroller 102 (or in a memory built into, or located outside of the secure microcontroller 102).

When no communication is ongoing on the I/O line, a voltage is applied for a predetermined period of time, to the I/O line to charge the parasitic capacitance. The voltage may be applied by the smart card reader module 104 or by the capacitive sensor 110 upon being instructed by the secure microcontroller 102. As soon as the applied voltage is removed from being further applied to the I/O line, the parasitic capacitance starts to discharge. Starting at the moment when the voltage is removed to a predetermined time period, the parasitic capacitance will discharge to a particular value or less, as predetermined and stored in the secure microcontroller 102. As shown in the graph 150, the value drops to V_{ref_ok} after Tmean time period from the removing the voltage. Vref_ok is equal or lower than a predetermined value stored in the secure microcontroller 102. When a rogue third party device (e.g., the PIN bug sniffer 108) is inserted as shown in Figure 1, a person skilled in the art would know that the parasitic capacitance increases. Due to this increased parasitic capacitance, in Tₘₑₐₙ time interval, the value does not fall as much as when the parasitic capacitance was less. This value is shown as V_{ref_temper} which indicates that the I/O line has been tempered with.

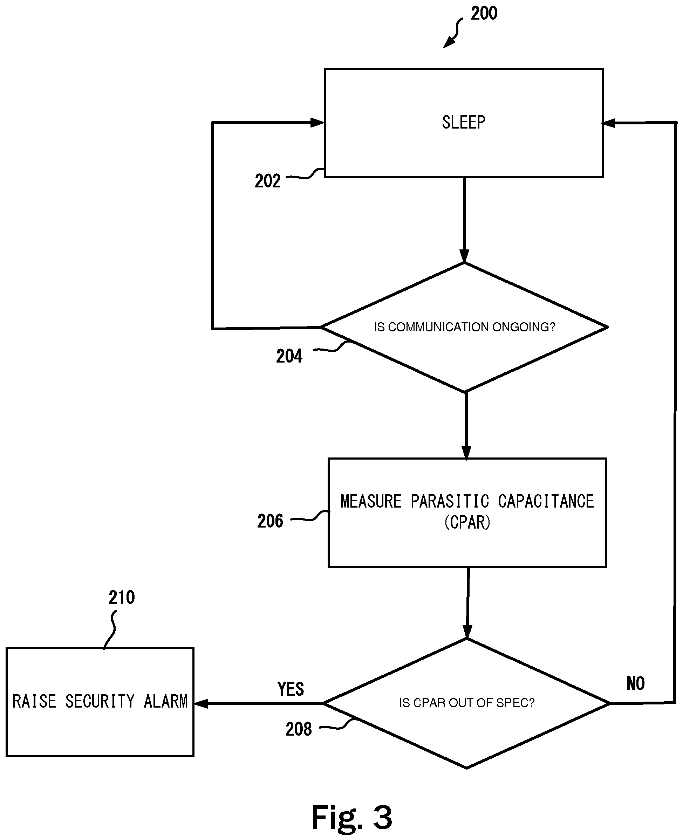

Figure 3 illustrates a method 200 of identifying intrusions. Accordingly, at steps 202 and 204, the secure microcontroller 102 detects that no communication is ongoing on the I/O line. If a communication is detected, no action is taken for a predetermined time interval. At step 204, if no communication is ongoing on the I/O line, the capacitance is measured through the capacitive sensor 110 by applying a voltage to the I/O line, as described above. If the measured capacitance or voltage is below a preselected value, the control goes back to step 202. If the measured capacitance or voltage is above the predetermined value, the smart card reader 100 is disabled and/or a security alarm is raised.

## Claims

1. A device (100), comprising:
a secure microcontroller (102);
a smart card reader module (104) coupled to the secure microcontroller (102): and
a smart card connector (106) coupled to the smart card reader module (104) through a coupling line, **characterized in that** the device (100) further comprises
a capacitive sensor (110) coupled to the coupling line and the secure micro-controller (102);
wherein the secure microcontroller (1 02) is configured to receive a value of parasitic capacitance through the capacitive sensor (110) and disable the device (100) if the value is above a prestored value in the secure microcontroller (102),
wherein the coupling line includes an input/output line and a clock line,
wherein a discharge rate of the capacitance in the clock line is measured by the capacitive sensor (110).

2. The device (100) of the preceding claim, wherein the value of the parasitic capacitance is measured at a predetermined time after applying a voltage to the coupling line.

3. The device (100) of any preceding claim, wherein the prestored value is determined during a manufacturing and testing process of the device (100) and stored in a memory of the secure microcontroller (102).

4. The device (100) of any preceding claim, wherein the disabling of the device (100) includes disabling the smart card reader module (104) from initiating a communication on the coupling line.

5. The device (100) of claim 2, wherein a value of the predetermined time is determined during a manufacturing and testing of the device (100) and stored in the secure microcontroller (102).

6. A method of detecting an intrusion in a smart card reader (100), the method comprising:
detecting that no communication is ongoing between a smart card and the smart card reader (100);
upon detecting that no communication is ongoing, applying a voltage to a communication line between a smart card connector (106) and a smart card reader module (104);
measuring parasitic capacitance on the communication line at a predetermined time interval after applying the voltage; and
disabling the smart card reader (100) if the measured parasitic capacitance is higher than a predetermined value, **characterized in that**
the communication line includes an input/output line and a clock line,
wherein a discharge rate of the capacitance in the clock line is measured by a capacitive sensor (110).

7. The method of claim 6, wherein the value of the parasitic capacitance is measured at a predetermined time after applying a voltage to the coupling line.

8. The method of claim 6 or 7, wherein the predetermined time interval is determined during a manufacturing and testing process of the device (100) and stored in a memory of the secure microcontroller (102).

9. The method of claim 6, 7 or 8, wherein the disabling of the smart card reader (100) includes disabling the smart card reader module (104) from initiating a communication on the communication line.

10. A computer readable medium comprising programming instructions which when executed by a processor perform the method of any one of claims 6 to 9.

## Patentansprüche

1. Vorrichtung (100), die Folgendes umfasst:
einen sicheren Mikrocontroller (102);
ein Smartcard-Lesemodul (104), das mit dem sicheren Mikrocontroller (102) gekoppelt ist; und
einen Smartcard-Verbinder (106), der durch eine Kopplungsleitung mit dem Smartcard-Lesemodul (104) verbunden ist, **dadurch gekennzeichnet, dass** die Vorrichtung (100) ferner Folgendes umfasst:
einen kapazitiven Sensor (110), der mit der Kopplungsleitung und dem sicheren Mikrocontroller (102) gekoppelt ist,
wobei der sichere Mikrocontroller (102) konfiguriert ist, durch den kapazitiven Sensor (110) einen Wert einer parasitären Kapazität zu empfangen und die Vorrichtung (100) zu deaktivieren, wenn der Wert über einem vorab gespeicherten Wert im sicheren Mikrocontroller (102) liegt,
wobei die Kopplungsleitung eine Eingangs/Ausgangsleitung und eine Taktleitung enthält,
wobei eine Entladungsgeschwindigkeit der Kapazität in der Taktleitung durch den kapazitiven Sensor (110) gemessen wird.

2. Vorrichtung (100) nach dem vorhergehenden Anspruch, wobei der Wert der parasitären Kapazität zu einer vorgegebenen Zeit nach dem Anlegen einer Spannung an die Kopplungsleitung gemessen wird.

3. Vorrichtung (100) nach einem der vorhergehenden Ansprüche, wobei der vorab gespeicherte Wert während eines Herstellungs- und Prüfprozesses der Vorrichtung (100) bestimmt und in einem Speicher des sicheren Mikrocontrollers (102) gespeichert wird.

4. Vorrichtung (100) nach einem der vorhergehenden Ansprüche, wobei das Deaktivieren der Vorrichtung (100) das Deaktivieren, dass das Smartcard-Lesemodul (104) eine Kommunikation auf der Kopplungsleitung auslöst, enthält.

5. Vorrichtung (100) nach Anspruch 2, wobei ein Wert der vorgegebenen Zeit während eines Herstellens und Prüfens der Vorrichtung (100) bestimmt und im sicheren Mikrocontroller (102) gespeichert wird.

6. Verfahren zum Detektieren eines Eindringens in einen Smartcard-Leser (100), wobei das Verfahren Folgendes umfasst:
Detektieren, dass zwischen einer Smartcard und dem Smartcard-Leser (100) keine Kommunikation stattfindet;
aufgrund des Detektierens, dass keine Kommunikation stattfindet, Anlegen einer Spannung an eine Kommunikationsleitung zwischen einem Smartcard-Verbinder (106) und einem Smartcard-Lesemodul (104);
Messen einer parasitären Kapazität auf der Kommunikationsleitung zu einem vorgegebenen Zeitintervall nach dem Anlegen der Spannung; und
Deaktivieren des Smartcard-Lesers (100), wenn die gemessene parasitäre Kapazität höher als ein vorgegebener Wert ist, **dadurch gekennzeichnet, dass**
die Kommunikationsleitung eine Eingangs/Ausgangsleitung und eine Taktleitung enthält,
wobei eine Entladungsgeschwindigkeit der Kapazität in der Taktleitung durch einen kapazitiven Sensor (110) gemessen wird.

7. Verfahren nach Anspruch 6, wobei der Wert der parasitären Kapazität zu einer vorgegebenen Zeit nach dem Anlegen einer Spannung an die Kopplungsleitung gemessen wird.

8. Verfahren nach Anspruch 6 oder 7, wobei das vorgegebene Zeitintervall während eines Herstellungs- und Prüfprozesses der Vorrichtung (100) bestimmt und in einem Speicher des sicheren Mikrocontrollers (102) gespeichert wird.

9. Verfahren nach Anspruch 6, 7 oder 8, wobei das Deaktivieren des Smartcard-Lesers (100) das Deaktivieren, dass das Smartcard-Lesemodul (104) eine Kommunikation auf der Kommunikationsleitung auslöst, enthält.

10. Computerlesbares Medium, das Programmanweisungen umfasst, die dann, wenn sie durch einen Prozessor ausgeführt werden, das Verfahren nach einem der Ansprüche 6 bis 9 durchführen.

## Revendications

1. Dispositif (100) comportant :
un microcontrôleur sécurisé (102) ;
un module (104) de lecteur de carte à puce couplé au microcontrôleur sécurisé (102) ; et
un connecteur (106) pour carte à puce couplé au module (104) de lecteur de carte à puce par l'intermédiaire d'une ligne de couplage, **caractérisé en ce que** le dispositif (100) comporte en outre
un capteur capacitif (110) couplé à la ligne de couplage et au microcontrôleur sécurisé (102) ;
le microcontrôleur sécurisé (102) étant configuré pour recevoir une valeur de capacitance parasite par l'intermédiaire du capteur capacitif (110) et neutraliser le dispositif (100) si la valeur est supérieure à une valeur pré-stockée dans le microcontrôleur sécurisé (102), la ligne de couplage comprenant une ligne d'entrée/sortie et une ligne d'horloge,
un taux de décharge de la capacitance dans la ligne d'horloge étant mesuré par le capteur capacitif (110).

2. Dispositif (100) selon la revendication précédente, la valeur de la capacitance parasite étant mesurée un temps prédéterminé après l'application d'une tension à la ligne de couplage.

3. Dispositif (100) selon l'une quelconque des revendications précédentes, la valeur pré-stockée étant déterminée pendant un processus de fabrication et de tests du dispositif (100) et stockée dans une mémoire du microcontrôleur sécurisé (102).

4. Dispositif (100) selon l'une quelconque des revendications précédentes, la neutralisation du dispositif (100) comprenant le fait d'empêcher le module (104) de lecteur de carte à puce d'amorcer une communication sur la ligne de couplage.

5. Dispositif (100) selon la revendication 2, une valeur du temps prédéterminé étant déterminée au cours d'une fabrication et de tests du dispositif (100) et stockée dans le microcontrôleur sécurisé (102).

6. Procédé de détection d'une intrusion dans un lecteur (100) de carte à puce, le procédé comportant les étapes consistant à :
détecter qu'aucune communication n'est en cours entre une carte à puce et le lecteur (100) de carte à puce ;
suite à la détection du fait qu'aucune communication n'est en cours, appliquer une tension à une ligne de communication entre un connecteur (106) pour carte à puce et un module (104) de lecteur de carte à puce ;
mesurer une capacitance parasite sur la ligne de communication un intervalle de temps prédéterminé après l'application de la tension ; et
neutraliser le lecteur (100) de carte à puce si la capacitance parasite mesurée est supérieure à une valeur prédéterminée, **caractérisé en ce que**
la ligne de communication comprend une ligne d'entrée/sortie et une ligne d'horloge,
un taux de décharge de la capacitance dans la ligne d'horloge étant mesuré par un capteur capacitif (110).

7. Procédé selon la revendication 6, la valeur de la capacitance parasite étant mesurée un temps prédéterminé après l'application d'une tension à la ligne de couplage.

8. Procédé selon la revendication 6 ou 7, l'intervalle de temps prédéterminé étant déterminé pendant un processus de fabrication et de tests du dispositif (100) et stocké dans une mémoire du microcontrôleur sécurisé (102) .

9. Procédé selon la revendication 6, 7 ou 8, la neutralisation du lecteur (100) de carte à puce comprenant le fait d'empêcher le module (104) de lecteur de carte à puce d'amorcer une communication sur la ligne de communication.

10. Support lisible par ordinateur comportant des instructions de programmation qui, lorsqu'elles sont exécutées par un processeur, réalisent le procédé selon l'une quelconque des revendications 6 à 9.
